(19) Europäisches Patentamt
European Patent Office
Office européen des brevets

(11) Veröffentlichungsnummer: **0 025 473**
**A1**

(12) # EUROPÄISCHE PATENTANMELDUNG

(21) Anmeldenummer: **80101156.0**

(22) Anmeldetag: **07.03.80**

(51) Int. Cl.³: **C 09 B 29/20**, C 09 B 33/02

(30) Priorität: **12.03.79 DE 2909607**

(43) Veröffentlichungstag der Anmeldung: **25.03.81 Patentblatt 81/12**

(84) Benannte Vertragsstaaten: **CH DE FR GB IT**

(71) Anmelder: **BASF Aktiengesellschaft, Carl-Bosch-Strasse 38, D-6700 Ludwigshafen (DE)**

(72) Erfinder: **Dimroth, Peter, Dr., Collinistrasse 5, D-6800 Mannheim 1 (DE)**
Erfinder: **Lotsch, Wolfgang, Dr., Stettiner Strasse 32, D-6711 Beindersheim (DE)**
Erfinder: **Liedeck, Egon, Dr., Holunderweg 16, D-7300 Esslingen (DE)**

(54) **Pigmentfarbstoffe der Monoazo-2,3-oxynaphthoesäurearylidreihe und deren Verwendung zum Färben von Druckfarben, Lacken oder Kunststoffen.**

(57) Pigmentfarbstoffe der allgemeinen Formel

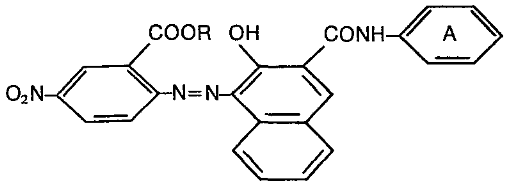

I,

in der

R $C_1$- bis $C_4$-Alkyl ist und der Ring A noch einen annellierten Ring oder ein bis drei nicht löslichmachende Substituenten tragen kann.

Die erfindungsgemäßen Verbindungen eignen sich sehr gut als Pigmente, z.B. zum Färben von Druckfarben, Lacken und Kunststoffen.

EP 0 025 473 A1

Pigmentfarbstoffe BEZEICHNUNG GEÄNDERT
siehe Titelseite

Die Erfindung betrifft Verbindungen der allgemeinen Formel I

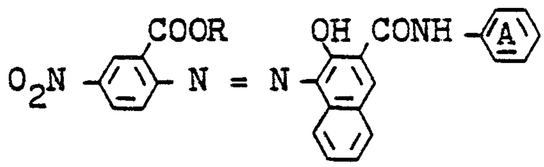

I ,

in der

R $C_1$- bis $C_4$-Alkyl ist und der Ring A noch einen annellierten Ring oder ein bis drei nicht löslichmachende Substituenten tragen kann.

Nicht löslichmachende Substituenten sind beispielsweise Halogenatome, Alkyl- oder Alkoxygruppen mit 1 bis 6 C-Atomen, Nitro-, Trifluormethyl-, Carbamoyl-, Ureido-, Sulfamoyl- oder Cyangruppen, Alkoxycarbonyl-, Alkanoyl-, Alkylcarbamoyl-, Alkylureido- oder Alkanoylaminogruppen mit 2 bis 6 C-Atomen, Alkylsulfonyl- oder Alkylsulfamoylgruppen mit 1 bis 6 C-Atomen, Aryloxycarbonyl-, Aroyl-, Arylsulfonyl-, Arylcarbamoyl-, Arylsulfamoyl-, Aryl-, Arylureido- oder Arylazogruppen oder ein ankondensierter 5 bis 6-gliedriger Heteroring, der im Ring eine $-\underset{\underset{O}{\|}}{C}-NH$-Gruppe enthält oder ein annellierter aromatischer 5 bis 6-gliedringer aromatischer Ring.

Insbesondere betrifft die Erfindung Verbindungen der allgemeinen Formel I a

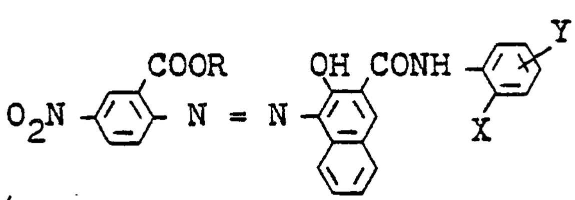

I a ,

Bg/BL

in der
R $C_1$- bis $C_4$-Alkyl,
X Wasserstoff, Fluor, Chlor, Brom, Methyl, Äthyl, Methoxy, Äthoxy, Cyan oder Methoxycarbonyl und
Y Wasserstoff, Fluor, Chlor, Brom, Methyl, Methoxy oder Äthoxy, Acetylamino oder Propidylamino bedeuten.

R ist vorzugsweise Methyl,
Y vorzugsweise Wasserstoff und
X Alkoxy, Methyl oder Chlor.

Die Verbindungen der Formel I haben Pigmentcharakter und zeichnen sich durch gute Lichtechtheit, Wetterechtheit und Überlackierechtheit aus. Im Vollton sind sie sehr brillant und haben oft hohes Deckvermögen.

Ein Teil der erfindungsgemäßen Pigmente ist sehr gut zur Verwendung in Lacken geeignet, da sie sich z. B. bei guter Purtonbrillanz durch hohes Deckvermögen und sehr gute Lichtechtheit auszeichnen. Sie können daher oft schwermetallhaltige Pigmente, z. B. in Lacken, ersetzen.

Andere Pigmente dieser Reihe sind hervorragende Druckpigmente, die sich z. B. durch gute Brillanz und Lichtechtheit auszeichnen.

Zur Herstellung der Verbindungen der Formel I kann man eine Diazoverbindung von Aminen der Formel II

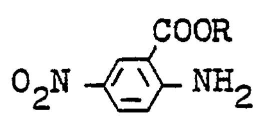
II

mit Kupplungskomponenten der Formel III

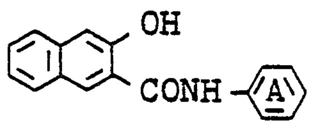

III

wobei R und A die vorgenannte Bedeutung haben, umsetzen.

Einzelheiten der Reaktion können den Beispielen entnommen werden, in denen sich Angaben über Teile und Prozente, sofern nicht anders vermerkt, auf das Gewicht beziehen.

Beispiel 1

20 Teile 5-Nitroanthranilsäuremethylester werden bei 0 bis +5 °C in 600 Teilen eines 1:1-Gemisches aus Ameisensäure und Propionsäure mit 30 Teilen Nitrosylschwefelsäure 3 Stunden gerührt. Nachdem mit Harnstoff überschüssiges Nitrit zersetzt ist, wird eine Lösung von 31 Teilen 2-Naphthol-3-carbonsäure-N-(2'-äthoxyphenyl)-amid in 600 Teilen Methanol und der zur Lösung notwendigen Menge an 50 %iger Natronlauge zugetropft und der pH durch Zugabe weiterer 50 %iger Natronlauge auf 3 - 5 eingestellt.

Man rührt über Nacht nach, erhitzt das Reaktionsgemisch noch 2 Stunden auf 70 °C, filtriert, wäscht mit Methanol und Wasser und trocknet. Man erhält 48 Teile des Farbstoffs der Formel IV

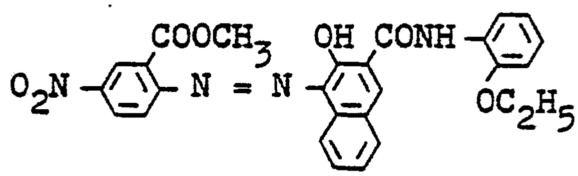

IV ,

der sich in dieser Form direkt zum Färben von Lacken und Druckfarben verwenden läßt. Die damit erzielten Färbungen zeichnen sich durch einen brillanten, gelbstichig roten Farbton aus mit guten Migrations- und Lichtechtheiten.

Eine besonders brillante und deckende Pigmentform mit noch besserer Lichtechtheit erhält man, wenn man z. B. 10 Teile des Farbstoffes der Formel IV in 100 Teilen Dimethylformamid 3 Stunden bei 110 °C rührt und nach dem Abfiltrieren mit Dimethylformamid und Methanol wäscht und danach trocknet. Man erhält dann eine Ausbeute von 9 Teilen.

Pigmente mit vergleichbar guten Eigenschaften werden erhalten, wenn man analog Beispiel 1 das Diazoniumsalz des 5-Nitroanthranilsäuremethylesters mit den in der Tabelle aufgeführten Kupplungskomponenten der Formel III umsetzt und gegebenenfalls einem Finish unterwirft:

| Bsp. | Kupplungskomponente | Farbe |
|---|---|---|
| 2 | 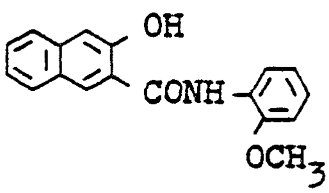 | gelbstichig rot |
| 3 | 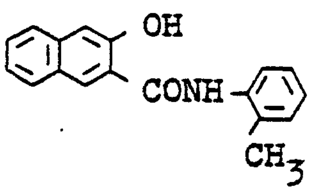 | gelbstichig rot |
| 4 | 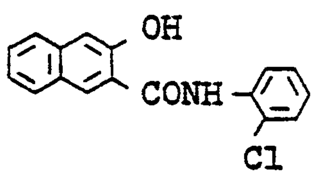 | blaustichig rot |
| 5 | 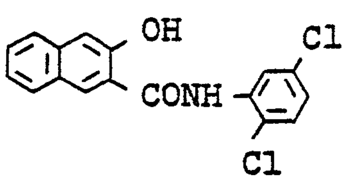 | gelbstichig rot |
| 6 | 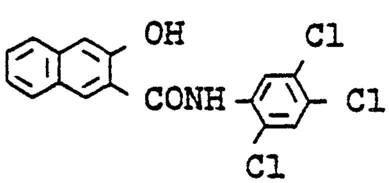 | blaustichig rot |
| 7 | 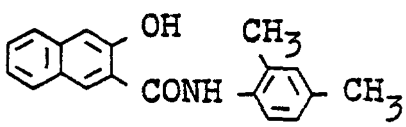 | gelbstichig rot |

| Bsp. | Kupplungskomponente | Farbe |
|---|---|---|
| 8 | 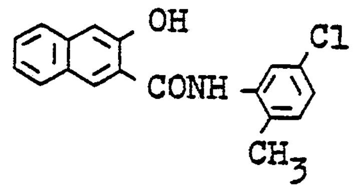 | gelbstichig rot |
| 9 | 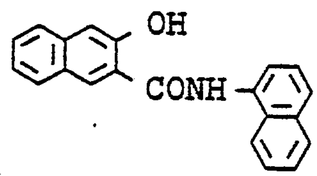 | neutral rot |
| 10 | 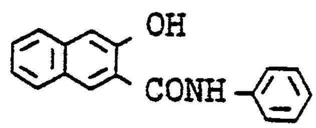 | gelbstichig rot |
| 11 | 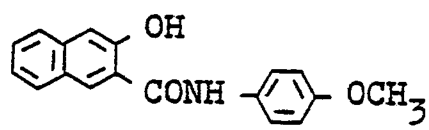 | blaustichig rot |
| 12 | 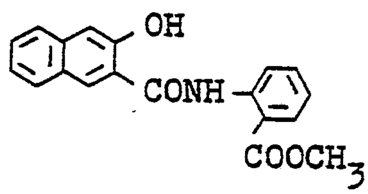 | gelbstichig rot |
| 13 | 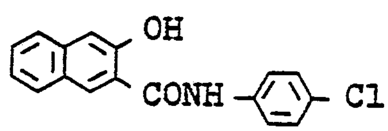 | neutral rot |
| 14 | 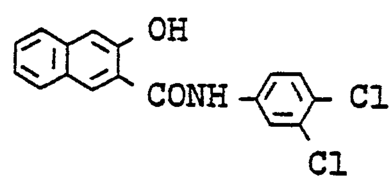 | neutral rot |
| 15 | 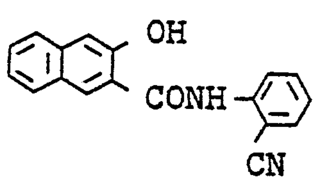 | neutral rot |

| Bsp. | Kupplungskomponente | Farbe |
|---|---|---|
| 16 | 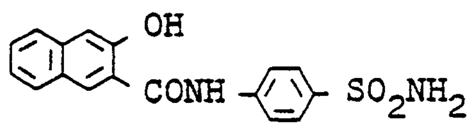 | rot |
| 17 | 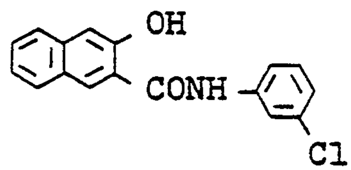 | rot |
| 18 | 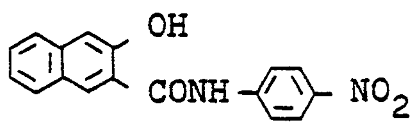 | rot |
| 19 | 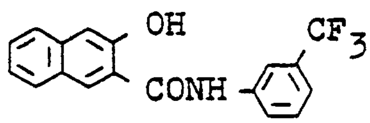 | gelbstichig rot |
| 20 | 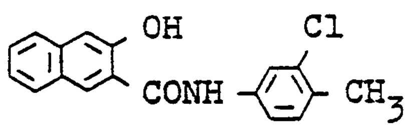 | blaustichig rot |
| 21 | 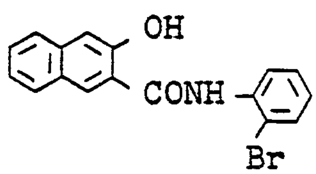 | neutral rot |
| 22 | 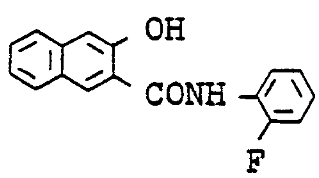 | neutral rot |
| 23 | 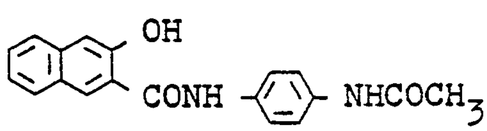 | blaustichig rot |

| Bsp. | Kupplungskomponente | Farbe |
|---|---|---|
| 24 | 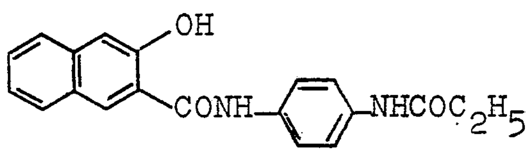 | blaustichig rot |
| 25 | 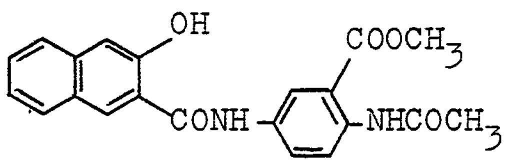 | blaustichig rot |

Beispiel 24

(Anwendung)

a) Lack

10 Teile des nach Beispiel 1 erhaltenen Farbstoffes und 95 Teile Einbrennlackmischung, die 70 % Kokosalkydharz (60 %ig in Xylol gelöst) und 30 % Melaminharz (ungefähr 55 %ig gelöst in Butanol/Xylol) enthält, werden in einem Attritor angerieben. Nach dem Auftragen und einer Einbrennzeit von 30 Minuten bei 120 °C werden gelbstichig rote Volltonlackierungen mit guter Licht- und Überspritzechtheit erhalten. Bei Zugabe von Titandioxyd werden gelbstichig rote Weißaufhellungen erzielt.

Verwendet man die in den Beispielen 2 bis 23 beschriebenen Farbstoffe, so werden Lackierungen in ähnlichen Farbtönen und ähnlichen Eigenschaften erhalten.

b) Druckfarbe

8 Teile des nach Beispiel 1 erhaltenen Pigmentfarbstoffes, 40 Teile eines mit Phenol/Formaldehyd modifizierten Kolophoniumharzes und 55 bis 65 Teile Toluol werden in einem Dispergieraggregat innig vermischt. Man erhält eine gelbstichig rote Toluol-Tiefdruckfarbe. Die mit dieser Farbe erhaltenen Drucke weisen gute Licht- und Wetterechtheit auf.

Bei Verwendung der Farbstoffe aus den Beispielen 2 bis 23 werden ähnliche Ergebnisse erhalten.

Patentansprüche

1. Pigmentfarbstoffe der allgemeinen Formel

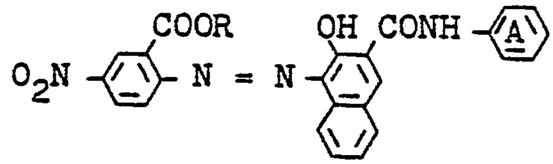

I ,

in der

R $C_1$- bis $C_4$-Alkyl ist und der Ring A noch einen annellierten Ring oder ein bis drei nicht löslichmachende Substituenten tragen kann.

2. Farbstoffe gemäß Anspruch 1 der allgemeinen Formel

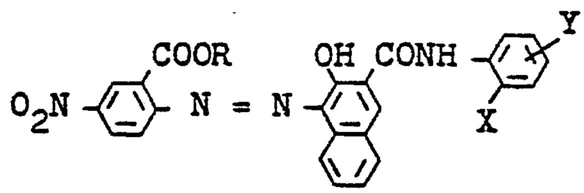

I a ,

in der

R $C_1$- bis $C_4$-Alkyl,

X Wasserstoff, Fluor, Chlor, Brom, Methyl, Äthyl, Methoxy, Äthoxy, Cyan oder Methoxycarbonyl und

Y Wasserstoff, Fluor, Chlor, Brom, Methyl, Methoxy, oder Äthoxy, Acetylamino oder Propionylamino bedeuten.

3. Farbstoffe gemäß Anspruch 1 der allgemeinen Formel

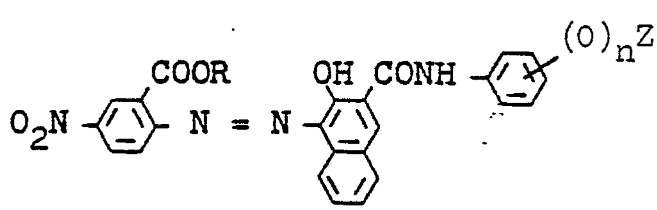

in der
n 0 oder 1 und
Z Methyl oder Äthyl sind.

4. Farbstoffe gemäß Anspruch 3, wobei n = 1 ist und der Substituent in o-Stellung zur NH-Gruppe steht.

5. Farbstoffe gemäß Anspruch 1, wobei der Ring A zu α-Naphthyl annelliert ist.

6. Verwendung der Farbstoffe gemäß Anspruch 1 zum Färben von Druckfarben, Lacken oder Kunststoffen.

0025473

Europäisches Patentamt

# EUROPÄISCHER RECHERCHENBERICHT

Nummer der Anmeldung
EP 80 11 1156

| Kategorie | EINSCHLÄGIGE DOKUMENTE<br>Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| X | DE - C - 721 625 (I.G. FARBEN)<br>* Seite 1, Zeilen 1-47; Seite 3; Beispiel 13 *<br>-- | 1,6 | C 09 B 29/20<br>33/02 |
| X | FR - A - 1 445 002 (CIBA)<br>* Seite 1, ganz; Seite 2, linke Spalte, Zeile 24; Seite 3, rechte Spalte, Absatz 3 bis Seite 4, linke Spalte, Zeile 6; Seite 5, Tabelle; Beispiele 21,25,26,35 *<br>-- | 1,6 | RECHERCHIERTE SACHGEBIETE (Int. Cl. 3) |
| X | FR - A - 1 474 394 (CIBA)<br>* Seite 1, Formel 2; Seite 2, linke Spalte, Formel 5; Seite 7, Beispiele 53-55 *<br>-- | 1,6 | C 09 B 29/20<br>29/18<br>29/00<br>43/32<br>33/02<br>33/00 |
| | US - A - 1 684 275 (HOFFA, FISCHER)<br>* Seite 1; Ansprüche 1-6 *<br>----- | 1,6 | |

KATEGORIE DER GENANNTEN DOKUMENTE
- X: von besonderer Bedeutung
- A: technologischer Hintergrund
- O: nichtschriftliche Offenbarung
- P: Zwischenliteratur
- T: der Erfindung zugrunde liegende Theorien oder Grundsätze
- E: kollidierende Anmeldung
- D: in der Anmeldung angeführtes Dokument
- L: aus andern Gründen angeführtes Dokument
- &: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 23-06-1980 | GREEN |